# EUROPEAN PATENT APPLICATION

(11) **EP 3 232 184 A1**
(43) Date of publication of application: **18.10.2017**
(21) Application number: 16460058.7
(22) Date of filing: 29.08.2016
(51) Int. Cl.: G01N 21/896, G01N 21/958

(54) **SURFACE SOURCE OF SIDE LIGHT**

(30) Priority: 15.04.2016 PL 41686716
(71) Applicant: Sorter Spolka Jawna Konrad Grzeszczyk Michal Ziomek, 26-600 Radom (PL)
(72) Inventor: Gutknecht, Bogdan, 97-400 Belchatów (PL); Grzeszczyk, Konrad, 26-600 Radom (PL); Ziomek, Michal, 26-600 Radom (PL)

(57) **Abstract**

The object of this invention is a surface source of side light to illuminate transparent materials, e.g. foils or glass, in automatic vision systems that detect material defects and evaluate their technical parameters. The surface source of side light consists of distinctive flat surface source of light (5) over which there are mounted two screens (3) and (4), each with opening/fissure (3a) and (4a) arranged in such a way that openings/fissures (3a) and (4a) in screens (3) and (4) never line up with each other.

## Description

It is a principal object of the present invention to provide a surface source of side light to illuminate transparent materials in automatic vision systems that detect material defects and evaluate their technical parameters.
Detecting defects in transparent materials such as foils or glass can directly affect the quality of their production because such analysis enables detection and rejection of possible defects in the test materials in order to introduce changes in their production parameters. In most known control devices applied in this kind of material defects, the system in use consists of a light source, e.g. a laser, which illuminates the transparent test material. After laser rays go through the test material, they are analyzed by a detection device which reacts to visible radiation and helps to identify and locate the depth and position of such defects.

An optical device for transparent material control that contains a source of light and illumination system that directs the light onto the controlled material has been known heretofore from the German patent specification no. 3926349. A beam of light from the light source is controlled onto the test material and subsequently the reflected beam and the beam going through the material reach the reception system equipped with a lens and a camera. The beams of light are then converted into an electric system which is analyzed by the data processing system to determine and identify the location of a defect in the material.
Another inspecting device known from the Japanese patent specification no. 61207953 discriminates a true defect from a foreign matter such as dust or other contamination by irradiating a horizontal laser beam and controlling the scattering of such beam. In this solution the material under inspection is exposed to upwards illumination by a source of light and side illumination by the laser beam. Finally, the computer analyses signals from the light that goes through the material and the ones from the laser beam reflected from the defect.

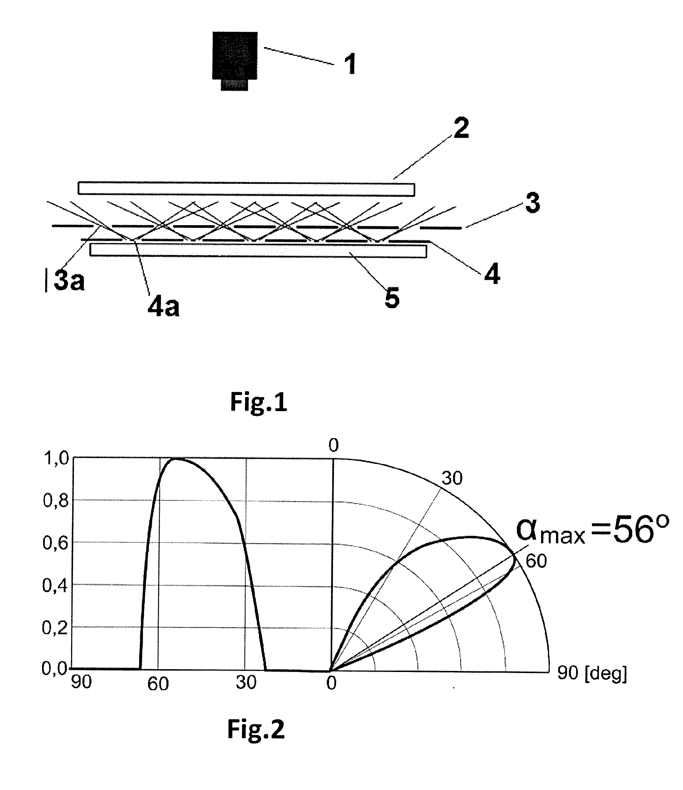

Another Japanese patent specification no. 6232345 applies the solution whereby the test material gets side illumination at 30-45° angle and the reflected image is recorded by the camera mounted in perpendicular position with respect to the test material.
The American patent specification no. 38144946 for detecting defects in transparent or semitransparent materials in the form of a plate, illuminates the test material from both sides in such a way that both sources of light in connection with a photodetector constitute two optical systems. The first one detects inner defects by means of a light beam that goes through the plate, while the second identifies surface defects using the light that is reflected from the surface of the test plate.
Current technology also knows defect detection and evaluation systems for flat, transparent materials which use side lighting, where lights are placed outside the area recorded by the camera. Test material is placed on a dark or black background. This kind of lighting allows for detection of different defects in transparent materials. However, the drawback of this solution is its big size, because lights are mounted outside the test material and camera range. Another problem is the difficulty to obtain homogeneous illumination of a big surface. The objective of this invention is to develop a simple and cheap solution for a surface source of side light that is small in size.
The surface source of side light according to the invention consists of a camera mounted it most upper position and connected to a computer and a conveyor for transparent test material. Its essential feature is that it has a flat, surface source of light, preferably with two screens of different size and shape mounted over it, depending on the desired direction of lightening, each with an opening. Preferably, he two openings do not line up with each other, so that the system of two screens with openings/fissures placed between the transparent test material and the surface source of light eliminates the light that directly enters the camera, which helps obtain homogeneous illumination of the transparent test material, even on big surface. Said system of openings/fissures in both screens prevents the light from travelling from the flat surface source directed perpendicularly to the illuminated test material, so that the transparent test material is illuminated from the bottom only by the light that is directed at it at an angle, whereby the angle at which the light falls on the test material depends on the size and shape of the openings/fissures in both screens and their mutual position with respect to each other.
The invention has been presented in the accompanying drawing, where Fig. 1 is a lateral view of the surface source of side light according to the invention lateral view.
Fig. 2 shows directional qualities of the side light source (axis Y stands for relative light, axis X is light fall angle).
The surface source of side light consisting of upper camera 1 connected to the computer (not shown) and conveyor (not shown) of the test material, wherein it has got flat, surface source of light 5 over which there are mounted two screens 3 and 4, each with opening/fissure 3a and 4a arranged in such a way that openings/fissures 3a and 4a in screens 3 and 4 never line up with each other. Openings/fissures 3a and 4a in screens 3 and 4 in the provisional model are 4 mm wide and 13 mm long and are placed 6 mm from each other. In each screen 3 and 4 there are 30 fissures/openings 3 a and 4a arranged in such a way that they do not line up with each other. The distance between 3 and 4 is 2,5 mm, whereby screen 4 is situated on surface source of light 5. This kind of screen 3 and 4 arrangement enables to achieve directional quality of the side light source illuminance - Fig. 2.

## Claims

1. A surface source of side light, wherein there is a flat surface source of light (5) over which there are mounted two screens (3) and (4), each with opening/fissure (3a) and (4a) arranged in such a way that openings/fissures (3a) and (4a) in screens (3) and (4) never line up with each other.
